# FASCICULE DE BREVET EUROPEEN

(11) **EP 3 283 805 B1**
(45) Date de publication et mention de la délivrance du brevet: **19.06.2019**
(21) Numéro de dépôt: 15726229.6
(22) Date de dépôt: 16.04.2015
(51) Int. Cl.: F16L 39/00, F16L 39/02, F16L 53/32

(54) **DISPOSITIF DE RACCORDEMENT/ CHAUFFAGE DE FLUIDES, CIRCUIT DE TRANSFERT DE FLUIDES L'INCORPORANT, PROCÉDÉ D'ASSEMBLAGE DU DISPOSITIF ET DU CIRCUIT**
FLUIDVERBINDUNGS-/HEIZVORRICHTUNG, FLÜSSIGKEITSÜBERTRAGUNGSSCHALTUNG MIT DIESER VORRICHTUNG, VERFAHREN ZUR MONTAGE DER VORRICHTUNG UND SCHALTUNG
FLUID CONNECTION/HEATING DEVICE, FLUID TRANSFER CIRCUIT INCORPORATING SAID DEVICE, METHOD OF ASSEMBLY OF THE DEVICE AND CIRCUIT

(43) Date de publication de la demande: 21.02.2018
(73) Titulaire: Hutchinson, 75008 Paris (FR)
(72) Inventeur: FAILLU, Jean-Luc, 45700 Villemandeur (FR); GODEAU, Denis, 45260 Vieilles Maisons (FR)
(74) Mandataire: Gevers & Orès
(86) Numéro de dépôt international: PCT/FR2015/051036
(87) Numéro de publication internationale: WO 2016/166422

(56) Documents cités:
- WO-A1-2014/198915
- FR-A1- 2 822 922
- US-A1- 2010 276 026
- US-A1- 2011 241 333

## Description

La présente invention concerne un dispositif de raccordement et de chauffage comprenant un connecteur à l'intérieur duquel sont formés, via un insert de connexion, un premier canal pour un fluide à réchauffer, tel qu'une solution d'urée pour un circuit de dépollution par réduction catalytique sélective (« SCR » en anglais pour « selective catalytic réduction ») de véhicule automobile et un second canal entourant le premier canal pour un fluide caloporteur, tel qu'un liquide de refroidissement principal d'un moteur thermique du véhicule ayant été préalablement réchauffé. L'invention concerne également un procédé d'assemblage de ce dispositif, un circuit de transfert de fluides l'incorporant et un procédé d'assemblage de ce circuit, L'invention s'applique au domaine du transfert de fluides automobiles (e.g. pour véhicules mus par un moteur thermique à combustion interne de type tourisme, utilitaire, poids-burd, de chantier ou agricole) ou à d'autres domaines (e.g. pour installations à poste fixe utilisant un groupe électrogène et un moteur analogue). Dans ces deux cas, les dispositifs de l'invention peuvent en particulier équiper des circuits de dépollution ou d'air.

Il existe actuellement sur le marché un grand nombre de dispositifs de raccordement et de chauffage pour des circuits de dépollution de type « SCR », les connectiques chauffantes utilisées étant le plus souvent alimentées électriquement pour réchauffer le liquide « SCR » à base d'urée (qui répond typiquement à la dénomination « Adblue » et qui gèle à une température d'environ -11° C).

Un inconvénient majeur des connectiques chauffantes électriques pour circuits « SCR » réside dans leur coût de fabrication élevé et dans leur inertie thermique qui retarde le chauffage du liquide « SCR ».

En variante, il est connu de chauffer le liquide « SCR » par une circulation environnante annulaire sensiblement concentrique du liquide de refroidissement (e.g. mélange eau-glycol) réchauffé par le moteur thermique du véhicule, comme par exemple décrit dans les documents US-A1-2011/0241333 et WO-A1-2014/198915,

US-A1-2011/0241333 enseigne à sa figure 5 d'utiliser une connectique chauffante de ce type, via un insert en deux parties pour le liquide « SCR » qui en position d'assemblage dépasse axialement du connecteur à deux entrées (liquide « SCR » et eau de refroidissement) à l'intérieur duquel il est monté en étant raccordé à un tuyau « SCR » et autour duquel est concentriquement monté un tuyau d'eau axialement flexible, L'eau circule autour du liquide parcourant l'insert « SCR » par un canal annulaire de faible hauteur radiale délimité par le connecteur et le tuyau d'eau,

WO-A1-2014/198915 présente une connectique chauffante similaire, mais avec un connecteur liquide « SCR » - eau en deux parties et une circulation d'eau autour du liquide « SCR » encore plus réduite du fait du montage de l'insert « SCR » axialement décalé hors du connecteur.

Ces connectiques utilisant le liquide de refroidissement pour chauffer le liquide « SCR » sont usuellement plus performantes d'un point de vue thermique, mais présentent l'inconvénient majeur d'être très difficiles à assembler sur les tuyaux véhiculant le liquide « SCR » et ce liquide de refroidissement. De plus, le chauffage du conduit interne de l'insert par l'eau circulant dans les connectiques de ces documents laisse à désirer, en raison du montage de l'insert et de la configuration du canal annulaire parcouru par l'eau autour de cet insert.

US 2010/0276026 A1 et FR 2 822 922 A1 divulguent un dispositif de raccordement et de chauffage comprenant un connecteur et un insert tubulaire de connexion, respectivement.

Un but de la présente invention est de proposer un dispositif de raccordement et de chauffage qui remédie à ces inconvénients.

Selon l'invention, un dispositif de raccordement et de chauffage selon la revendication 1 est proposé.

A cet effet, un dispositif de raccordement et de chauffage selon l'invention est tel que i'insert est monté par coulissement à travers ledit second orifice (i.e. en coulissant selon ledit premier axe) en passant d'une position intermédiaire de non-raccordement du dispositif où ladite seconde extrémité de I'insert est située axialement à l'extérieur dudit second orifice, à une position finale de raccordement du dispositif où ladite seconde extrémité de i'insert est située axialement vers l'intérieur dudit second orifice.

On notera que ce coulissement de l'insert permet de faciliter grandement l'assemblage du dispositif par le raccordement étanche des tuyaux véhiculant les premier et second fluides respectivement à l'insert et au connecteur, tout en améliorant par rapport aux documents précités le chauffage du premier fluide parcourant I'insert grâce à cette position finale de I'insert à l'intérieur du connecteur, en procurant un réchauffement à la fois rapide et complet du conduit interne de I'insert

Selon une autre caractéristique de l'invention, le coulissement peut présenter une course axiale entre ladite position intermédiaire et ladite position finale qui est au moins égale à une longueur axiale de ladite portion radiale dudit second canal mesurée selon ledit premier axe.

Selon l'invention, ladite première extrémité de l'insert est montée contre ladite paroi tubulaire du connecteur dans ladite position intermédiaire, et de manière étanche contre ledit premier orifice dans ladite position finale.

Avantageusement, l'insert peut présenter une structure monobloc comprenant :
- une première partie de diamètre externe maximal qui comprend ladite première extrémité de l'insert et qui est montée contre ledit premier orifice dans ladite position finale, et
- une seconde partie de diamètre externe minimal qui comprend ladite seconde extrémité de l'insert et autour de laquelle est destiné à être monté ledit premier tuyau.

Egalement avantageusement, dans ladite position finale, ladite portion radiale et ladite portion axiale dudit second canal enveloppent l'insert sur une longueur axiale d'enveloppement qui peut être supérieure à 75 % d'une longueur axiale de l'insert, et ladite paroi tubulaire du connecteur peut présenter un diamètre interne moyen au moins égal à 1,5 fois ledit diamètre externe minimal de l'insert, de sorte à chauffer pratiquement tout Se premier fluide parcourant l'insert par le second fluide.

On notera que cet enveloppement sur une grande hauteur radiale dudit second canal (cette hauteur radiale étant définie par la différence de diamètres entre l'intérieur du connecteur et l'insert) permet ainsi de chauffer la quasi-totalité du conduit interne à cet insert.

Selon une autre caractéristique de l'invention, le connecteur peut comprendre:
- ladite paroi tubulaire, autour de laquelle est destiné à être monté un second tuyau véhiculant le second fluide,
- une paroi transversale avant qui est globalement perpendiculaire à ladite paroi tubulaire et vers l'intérieur de laquelle est formée ladite portion radiale dudit second canal, et
- une paroi transversale arrière qui est perpendiculaire à ladite paroi tubulaire et dans laquelle est formé ledit premier orifice, lequel se prolonge suivant ledit premier axe par une première partie dudit premier canal qui est définie dans ladite position finale par ladite première partie de l'insert en y définissant partiellement ledit conduit interne de l'insert, un premier embout d'acheminement du premier fluide dans le connecteur étant destiné à être enfoncé dans ledit conduit interne (le premier embout formant alors un embout mâle pour le connecteur) ou à enserrer ledit conduit interne (le premier embout formant dans cette variante un embout femelle pour le connecteur), de sorte que l'intérieur de l'insert soit réchauffé par ledit second fluide.

Avantageusement, ce connecteur peut comprendre une coque externe comportant un tronçon avant dans laquelle sont formées ladite paroi tabulaire et ladite paroi transversale avant et un tronçon arrière dans laquelle est formée ladite paroi transversale arrière, laquelle comprend en outre un troisième orifice pour acheminer axialement le second fluide parallèlement audit premier fluide et vers ladite portion radiale dudit second canal.

Encore plus avantageusement selon des exemples de réalisation de l'invention :
- ledit troisième orifice peut se prolonger parallèlement audit premier axe et à distance radiale de celui-ci par une portion arrière dudit second canal, laquelle portion arrière peut être destinée à être occupée par un second embout d'acheminement du second fluide enfoncé dans le connecteur et peut déboucher dans ladite portion radiale dudit second canal :
- ladite coque externe peut être assemblée par solidarisation mécanique dudit tronçon avant avec ledit tronçon arrière avec interposition d'au moins un joint d'étanchéité annulaire, ledit tronçon arrière pouvant présenter un épaulement circonférentiel formant butée pour ledit second embout une fois ce dernier enfoncé dans ladite portion arrière dudit second canal (le second embout formant alors un embout mâle pour le connecteur) ou enserrant ladite portion arrière (le second embout formant dans cette variante un embout femelle pour le connecteur) ; et
- la solidarisation mécanique entre les tronçons avant et arrière peut être de type dipsage, au moyen d'une patte périphérique du tronçon arrière crochetant une nervure périphérique du tronçon avant, ladite paroi transversale arrière pouvant présenter une face externe plane adaptée pour recevoir une plaque transversale d'un réservoir pour le premier fluide traversée de part en part par ledit premier embout et par ledit second embout.

Selon une autre caractéristique de l'invention, ledit dispositif peut comprendre des moyens de calage axial de l'insert à l'intérieur du connecteur dans ladite position Intermédiaire de non-raccordement et dans ladite position finale de raccordement, qui comprennent de préférence des saillies radiales du connecteur coopérant avec des renfoncements radiaux de l'insert.

Un circuit selon l'invention de transfert d'un premier fluide, en particulier un circuit de dépollution d'un véhicule automobile à moteur thermique par réduction catalytique sélective transférant une solution aqueuse d'urée à titre de premier fluide, comprend :
- un réservoir du premier fluide, et
- un dispositif de raccordement et de chauffage qui est adapté pour raccorder ledit réservoir à un premier tuyau véhiculant le premier fluide et qui est adapté pour réchauffer le premier fluide par un second fluide, en particulier un liquide de refroidissement du moteur réchauffé par ce dernier, le dispositif étant apte à véhiculer le second fluide entre ledit réservoir qu'il traverse de manière étanche et un second tuyau véhiculant le second fluide.

Selon l'invention, ce circuit est caractérisé en ce que le dispositif de raccordement et de chauffage est tel que défini ci-dessus.

Selon un autre aspect de l'invention, ce circuit de transfert de fluide comprend en outre ledit premier tuyau et ledit second tuyau qui sont chacun indépendamment élastomères ou plastiques et qui sont rigides axialement et souples radialement.

Selon une autre caractéristique de l'invention, dans ladite position finale de raccordement dudit dispositif :
- ledit premier tuyau peut être fixé sur et autour de l'insert en une première zone de fixation située axialement à l'intérieur du connecteur en regard de ladite paroi tubulaire, et
- ledit second tuyau peut être fixé sur et autour d'une portée cylindrique de ladite paroi tabulaire en une seconde zone de fixation située en regard de ou axialement juxtaposée à ladite première zone de fixation.

Un procédé d'assemblage selon l'invention d'un dispositif de raccordement et de chauffage tel que défini ci-dessus est tel que l'on fait coulisser I'insert à travers ledit second orifice et selon ledit premier axe en le faisant passer de ladite position intermédiaire à ladite position finale.

Un procédé d'assemblage d'un circuit de transfert selon l'invention tel que défini ci-dessus est tel qu'il comprend les étapes suivantes :
a) coulissement relatif dudit premier tuyau entouré par ledit second tuyau vers ladite paroi tabulaire du connecteur pour raccorder de manière étanche ledit premier tuyau à l'insert, lequel occupe alors ladite position intermédiaire où il dépasse axialement du connecteur, et
b) coulissement relatif de i'insert ainsi raccordé axialement vers l'intérieur de ladite paroi tubulaire, pour faire passer l'insert de ladite position intermédiaire à ladite position finale dans laquelle il est entièrement situé à l'intérieur du connecteur, et pour raccorder de manière étanche ledit second tuyau à ladite paroi tubulaire.

D'autres caractéristiques, avantages et détails de la présente invention ressortiront à la lecture de la description suivante de plusieurs exemples de réalisation de invention, donnés à titre illustratif et non limitatif, la description étant réalisée en référence aux dessins joints, parmi lesquels :
la figure 1 est une vue partielle éclatée et en perspective d'un dispositif de raccordement et de chauffage selon un exemple de l'invention et d'une plaque de fermeture d'un réservoir de premier fluide auquel ce dispositif est destiné à être raccordé,
la figure 2 est une vue en coupe axiale assemblée du dispositif de la figure 1 dans une position finale de raccordement à la plaque et à deux tuyaux interne et externe véhiculant les premier et second fluides,
la figure 3 est une vue en coupe axiale assemblée du dispositif des figures 1 et 2 dans une position intermédiaire de l'insert correspondant à un non-raccordement du dispositif à ces tuyaux,
la figure 4 est une vue en coupe axiale du dispositif de la figure 3 montrant le coulissement de t'insert de sa position de la figure 3 à sa position finale rendant le dispositif apte à être raccordé à ces tuyaux,

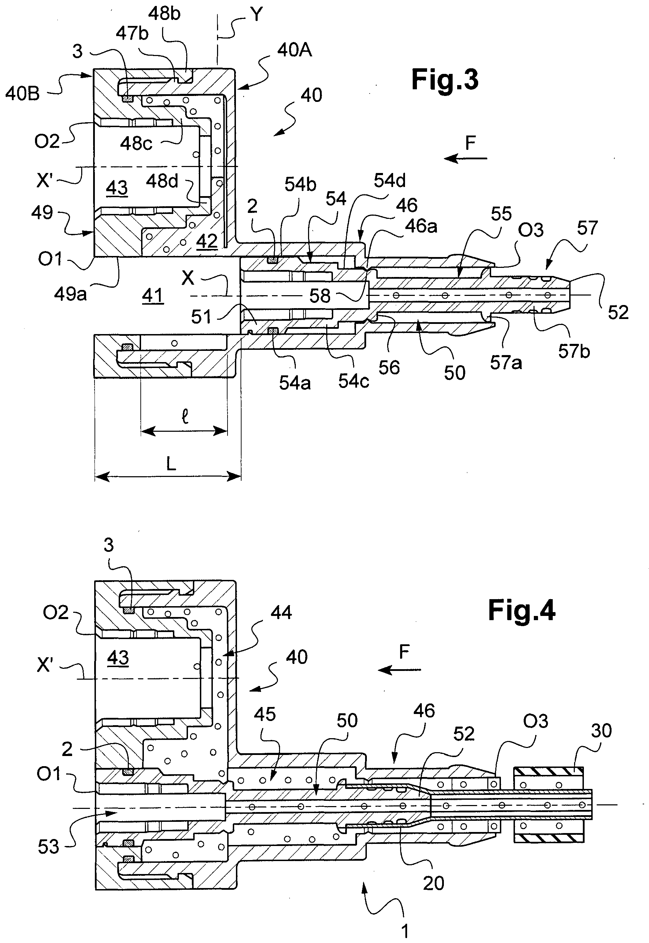

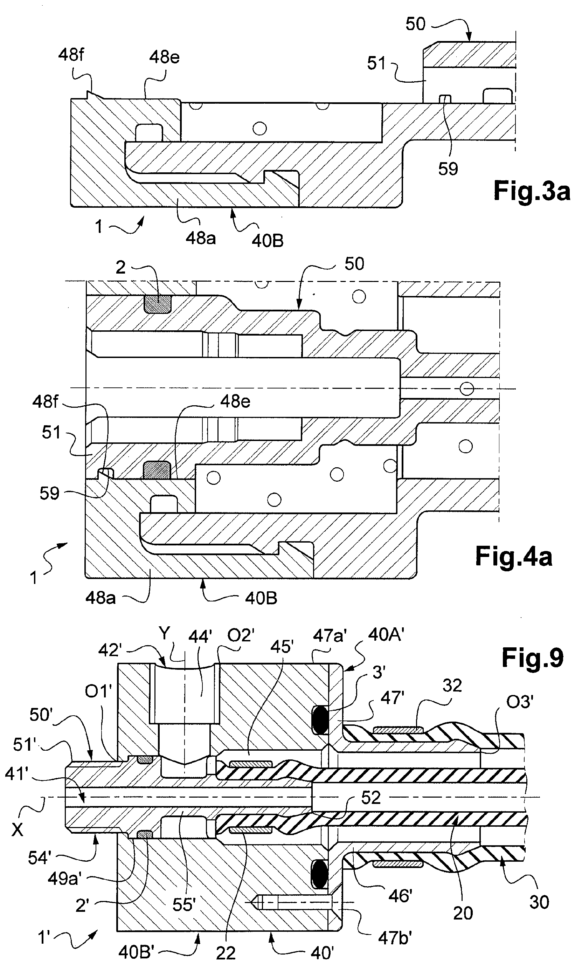

la figure 3a est une vue de détail en coupe axiale assemblée du dispositif de la figure 3 dans cette position intermédiaire de I'insert
la figure 4a est une vue de détail en coupe axiale assemblée du dispositif de la figure 4 dans cette position finale de l'insert,

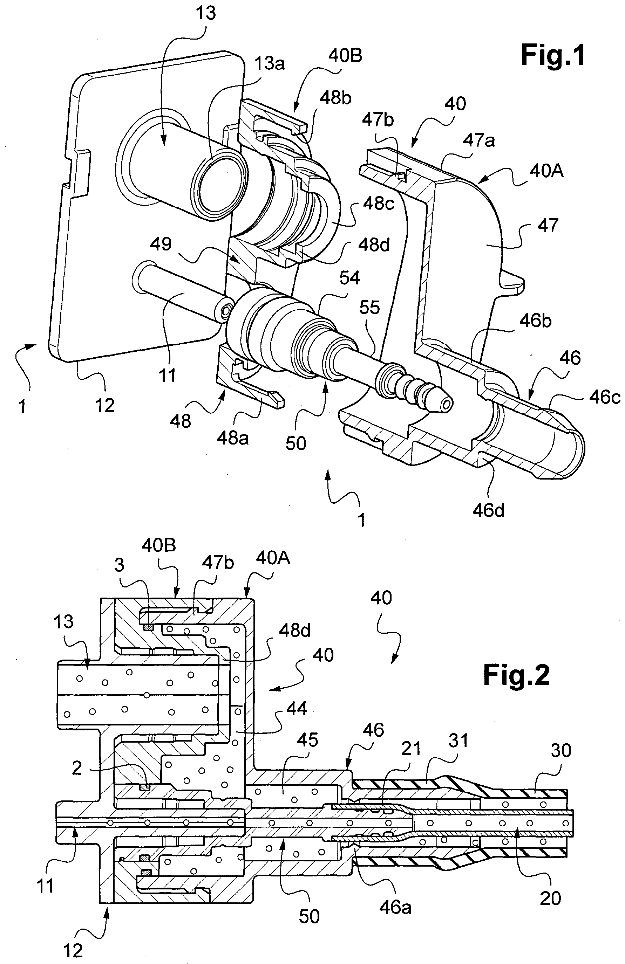

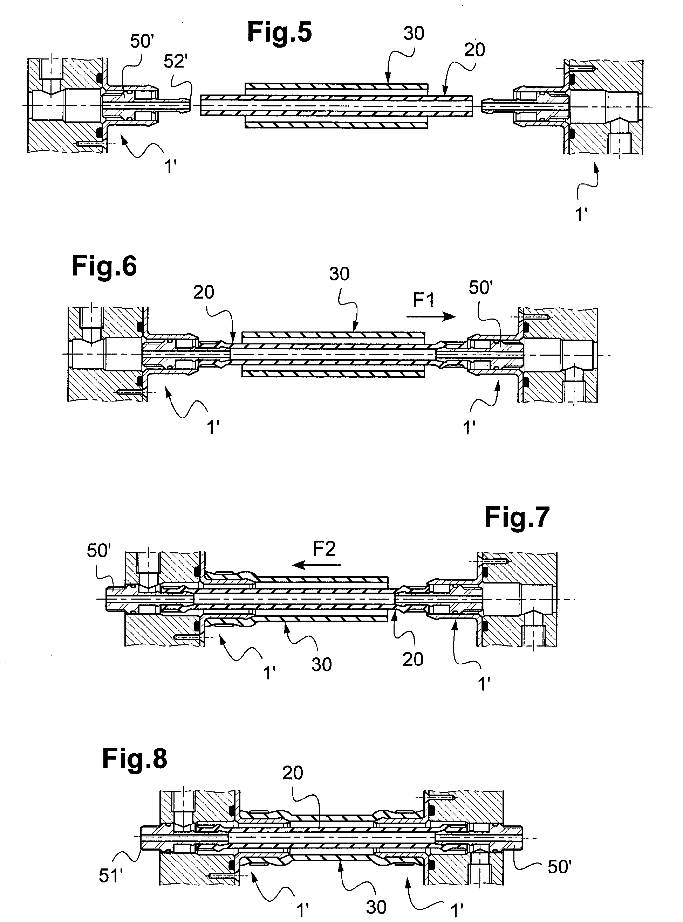

la figure 5 est une vue schématique partiellement éclatée en coupe axiale d'un circuit de transfert de fluides selon un exemple de l'invention comprenant des dispositifs de raccordement et de chauffage selon une variante des figures 1 à 4, avant assemblage des deux tuyaux interne et externe respectivement à I'insert et au connecteur de chaque dispositif,
la figure 6 est une vue schématique en coupe axiale du circuit de la figure 5 montrant le résultat d'une première étape de coulissement relatif et de fixation du tuyau interne vers chaque insert,
la figure 7 est une vue schématique en coupe axiale du circuit de la figure 6 montrant le résultat d'une seconde étape de coulissement relatif de i'insert portant le tuyau interne à l'arrière du connecteur de gauche et de fixation du tuyau externe à l'avant de ce connecteur de gauche,
la figure 8 est une vue schématique en coupe axiale du circuit de la figure 7 montrant le résultat d'une troisième étape de coulissement relatif de l'insert portant le tuyau interne à l'arrière du connecteur de droite et de fixation du tuyau externe à l'avant de ce connecteur de droite, et
la figure 9 est une vue agrandie en coupe axiale d'un dispositif selon la variante de l'invention des figures 5 à 8 dans ladite position finale.

Dans la présente description, les expressions « derrière » ou « arrière » désignent des positionnements relatifs selon les axes de symétrie X ou X' qui sont tournés du côté du sens de coulissement de l'insert vers le fond du connecteur (i.e, vers le réservoir de fluide, soit vers la gauche aux figures 1-4), et « devant » ou « avant » désignent des positionnements relatifs selon ces axes X ou X' tournés à l'opposé de cette direction (i.e. du côté des tuyaux interne et externe, soit vers la droite aux figures 1-4).

Le dispositif de raccordement et de chauffage 1 selon l'invention illustré aux figures 1 à 4 est adapté pour raccorder un premier embout tabulaire 11 d'une plaque de fermeture 12 d'un réservoir 10 contenant un premier fluide à réchauffer (e.g. une solution aqueuse d'urée par exemple de dénomination « Adblue » pour un circuit de dépollution de type « SCR », l'écoulement de ce fluide étant symbolisé par des points sur ces figures) à un premier tuyau 20 destiné à véhiculer le premier fluide acheminé par l'embout 11 dans un circuit de transfert de fluides tel que ce circuit de dépolluiton, et pour raccorder un second embout tubulaire 13 équipant la plaque 12 et acheminant un second fluide caloporteur (e.g. un liquide de refroidissement principal d'un moteur thermique de véhicule automobile de type mélange eau-glycol préalablement réchauffé, l'écoulement de ce fluide étant également symbolisé par des points sur ces figures) autour du premier fluide pour le réchauffer à un second tuyau 30 véhiculant le second fluide dans le circuit.

Le dispositif 1 comprend essentiellement :
- un connecteur 40 formant une coque externe pouvant être réalisée en matière plastique ou composite à matrice plastique, qui est adaptée pour être montée au contact de la plaque 12 autour des premier et second embouts 11 et 13 et pour être raccordée au second tuyau 30,
- un insert tubulaire 50 pouvant être également en matière plastique ou composite à matrice plastique, i'insert 50 étant monté en butée à l'intérieur du connecteur 40 en étant monté directement au contact du premier embout 11 et adapté pour être raccordé au premier tuyau 20, et
- des joints annulaires d'étanchéité 2 et 3 montés au sein du connecteur 40 et entre l'insert 50 et le connecteur 40 (voir les joints 2 et 3 aux figures 2-4).

Sont formés de manière traversante d'arrière en avant à l'intérieur du connecteur 40 :
- un premier canal 41 (voir figures 2-4) s'étendant le long d'un axe de symétrie X à partir d'un premier orifice arrière O1 du connecteur 40 et destiné à véhiculer le premier fluide à réchauffer, et
- un second canal 42 (voir figures 2-4) entourant le premier canal 41 et destiné à véhiculer le second fluide caloporteur, le canal 42 comprenant d'arrière en avant :
   * une portion arrière 43 s'étendant à partir d'un troisième orifice arrière O2 du connecteur le long d'un axe X' qui est parallèle à l'axe X en étant distant de ce dernier d'une distance correspondant à la distance entre les axes de symétrie respectifs des premier et second embouts 11 et 13, la portion arrière 43 étant destinée à recevoir en butée axiale le second embout 13,
   * une portion radiale 44 d'écoulement pour le second fluide s'étendant suivant un second axe Y perpendiculaire aux axes X et X', et
   * une portion axiale 45 d'écoulement pour le second fluide prolongeant à angle droit la portion radiale 44 le long de l'axe X jusqu'à un orifice avant O3 du connecteur 40 coaxial à l'orifice O1.

L'insert 50, avantageusement monobloc, est monté suivant l'axe X à l'intérieur du connecteur 40 et est adapté pour relier l'orifice O1 au premier tuyau 20 qui prolonge coaxialement le canal 41 hors de l'orifice O3, respectivement par une première et une seconde extrémités arrière 51 et avant 52 de l'insert 50 respectivement adjacentes aux orifices O1 et O3.

L'insert 50 définit à l'intérieur du connecteur 40 :
- un conduit interne 53 formant en partie le canal 41, et
- la portion axiale 45, de section transversale annulaire formée radialement entre l'insert 50 et une paroi tabulaire 46 du connecteur 40, laquelle paroi 46 s'étend à l'avant du connecteur 40 suivant l'axe X jusqu'à l'orifice O3 et est à raccorder au second tuyau 30 qui entoure coaxialement le premier tuyau 20 en étant ainsi radialement externe par rapport à ce dernier.

Plus précisément, l'insert 50 comprend (voir figure -3) :
- une première partie tubulaire arrière 54 destinée à être enfoncée à l'arrière du connecteur 40 et qui présente à proximité de son extrémité arrière 51 une gorge radiale périphérique 54a recevant un premier joint annulaire d'étanchéité 2 pour assurer un contact étanche avec l'intérieur du connecteur 40, et
- une seconde partie tubulaire avant 55 qui est reliée à la partie arrière 54 par un épaulement radial 56 et qui comprend une zone de raccordement 57 pourvue dans l'exemple illustré d'une butée radiale 57a à l'arrière et d'une succession de saillies radiales 57b à l'avant à la manière d'une queue de sapin pour faciliter l'accrochage du premier tuyau 20 à l'insert 50.

Dans l'exemple illustré, la partie arrière 54 de l'insert 50 présente une succession de portions cylindriques 54b, 54c, 54d de diamètres décroissants, avec la portion la plus à l'avant 54d qui présente sur sa face externe une encoche circonférentielle 58 conçue pour coopérer avec une nervure 46a par exemple triangulaire de forme complémentaire formée sur la face interne de la paroi avant 46 du connecteur 40, comme expliqué ci-après.

Comme notamment visible à la figure 1, le connecteur 40 est obtenu dans cet exemple par assemblage de plusieurs parties comprenant :
- un tronçon avant 40A qui forme d'un seul tenant une demi-coque périphérique adaptée pour entourer dans la position finale de raccordement l'ensemble des canaux 41 et 42 (seulement une moitié du tronçon 40A est représentée à des fins de clarté à la figure 1), et
- un tronçon arrière 40B qui forme d'un seul tenant une autre demi-coque également périphérique, le tronçon 40B étant adapté pour être monté contre la plaque 12 en recevant en butée axiale une extrémité avant 13a du second embout 13 et pour enserrer circonférentieliement l'insert 50 à proximité immédiate de sa première extrémité 51 (seulement une moitié du tronçon 40B est représentée à des fins de clarté à la figure 1).

Plus précisément, le tronçon avant 40A comprend :
- la paroi tubulaire avant 46 adaptée pour entourer dans la position finale la partie avant 55 de l'insert 50 et une zone de fixation 21 du tuyau 20 qui y est raccordée, la paroi avant 46 présentant dans cet exemple deux portions cylindriques arrière 46b et avant 46c reliées entre elles par un épaulement radial 46d contre lequel est destiné à être monté le second tuyau 30 en une zone de fixation 31 de ce dernier recouvrant la portion avant 46c qui forme ainsi une portée pour le tuyau 30,
- une paroi transversale avant 47 plate s'étendant radialement dans un plan perpendiculaire à l'axe X à partir de la paroi avant 46, et
- une paroi axiale 47a prolongeant vers l'arrière la paroi 47 parallèlement à l'axe X sur toute la périphérie du tronçon avant 40A, la paroi 47a étant dans cet exemple pourvue de moyens d'assemblage mécanique avec le tronçon arrière 40B constitués d'une nervure périphérique 47b en forme de rampe sur la face externe de la paroi 47a.

Le tronçon arrière 40B comprend :
- une partie radialement externe 48 qui forme une gorge axiale périphérique délimitée par :
   * une patte axiale radialement externe 48a coopérant avec ces moyens d'assemblage 47b par exemple via un crochet 48b formé sur une face interne de la patte 48a, et par
   * un manchon tubulaire 48c radialement interne comportant dans cet exemple deux portions axiales cylindriques avant et arrière reliées entre elles par un épaulement, de sorte que la portion arrière soit montée au contact de la paroi axiale du tronçon avant avec interposition d'un second joint d'étanchéité 3 et que la portion avant soit en montée au contact de l'embout 13 et se termine par un dernier épaulement 48d formant butée pour l'extrémité 13a de l'embout 13 ; et
- une partie radialement interne 49 qui prolonge le manchon 48c axialement vers l'arrière et qui forme une portée cylindrique 49a (voir figure 3) autour de Taxe X contre laquelle appuie radialement la partie arrière 54 de i'insert 50 munie du premier joint d'étanchéité 2, une fois cette partie arrière 54 enfoncée jusqu'au premier orifice 01.

Selon l'invention, l'insert 50 est monté par coulissement à travers l'orifice O3 en passant d'une position intermédiaire non raccordée à une position finale raccordée du dispositif 1 aux tuyaux 20 et 30 (voir la flèche F aux figures 3 et 4 pour le sens de ce coulissement), avec :
- l'extrémité arrière 51 de l'insert 50 de diamètre externe maximal qui passe d'une position au contact de la paroi avant 46 du connecteur 40 à un affleurement contre l'orifice 01, et
- l'extrémité avant 52 de l'insert 50 de diamètre externe minimal qui passe d'une position axialement à l'extérieur à une position axialement vers l'intérieur de l'orifice O3 (on voit à la figure 3 que la course axiale de ce coulissement L est supérieure à la longueur axiale 1 de la portion radiale 44 du canal 42 mesurée selon l'axe X).

On voit que dans la position intermédiaire de la figure 3 qui correspond avantageusement à l'état du dispositif 1 selon l'invention lors de sa livraison, l'insert 50 est retenu axialement à l'intérieur du connecteur 40 via le blocage momentané de l'encoche 58 formée sur sa partie arrière 54 par la nervure 46a formée sur la paroi tubulaire avant 46 et que dans cette position, la butée 57a formée sur la partie avant 55 de l'insert 50 se situe tout juste au-delà de l'entrée de la paroi tubulaire 46 (quasiment au niveau de l'orifice O3).

On voit en outre que dans la position finale de la figure 4, la portion radiale 44 et la portion axiale 45 du canal 42 enveloppent l'insert 50 sur une longueur axiale totale avoisinant les 100 % de la longueur axiale de l'insert 50 (par exemple comprise entre 80 et 90 % de cette longueur d'insert 50), et que la paroi tabulaire avant 46 présente un diamètre interne moyen sensiblement égal au double du diamètre externe minimal de l'insert 50. De cette manière, quasiment tout le premier fluide parcourant l'insert 50 est rapidement et complètement réchauffé par le second fluide sur la quasi-totalité du conduit interne 53 de l'insert 50.

Comme illustré à la figure 4, on peut noter que la portion radiale 44 du second canal 42 va s'élargissant axialement vers l'arrière du fait du manchon tabulaire 48c aboutissant à la partie radialement interne 49 formée par le tronçon arrière 40B du connecteur 40, ce qui favorise le chauffage rapide et complet du premier fluide parcourant la partie arrière 54 de l'insert 50 par le second fluide enveloppant cette partie arrière 54 au niveau de la portion radiale 44 du canal 42.

Les figures 3a et 4a détaillent les moyens de calage axial de l'insert 50 à l'intérieur du tronçon arrière 40B du connecteur 40 dans la position finale de raccordement, ces moyens s'ajoutant aux moyens de calage axial de l'insert 50 dans la position intermédiaire de non-raccordement qui sont constitués de l'encoche 58 de l'insert 50 coopérant avec la nervure 46a de la paroi avant 46 du connecteur 40 (voir ci-dessus).

Comme visible à la figure 3a, la patte axiale externe 48a du tronçon arrière 40B se prolonge radialement vers l'intérieur par une portée axiale 48e qui présente sur une partie de sa circonférence une saillie radiale 48f coopérant en retenue axiale avec une gorge radiale 59 de l'insert 50. La saillie 48f est dans cet exemple formée d'une rampe se terminant à l'arrière par un court tronçon radial contre et derrière lequel se cale la paroi arrière de la gorge 59 dans laquelle vient se loger la saillie 48f dans la position finale de raccordement de la figure 4a. On voit que la gorge 59 est immédiatement adjacente à l'extrémité arrière 51 de l'insert 50, et que la rampe 48f s'élève de manière oblique radialement vers l'intérieur et vers l'arrière.

Le dispositif 1' illustré aux figures 5-9 fonctionne globalement de la même manière que le dispositif 1 venant d'être décrit en référence aux figures 1-4 pour assurer le chauffage du premier fluide par le second fluide et le raccordement au réservoir 10 et aux tuyaux 20 et 30.

Comme visible à la figure 9 dans la position finale de raccordement, le dispositif 1' se distingue essentiellement du dispositif 1 en ce que (les éléments de fonctions analogues mais de structures différentes sont identifiés par les références du dispositif 1 augmentées d'un « ' ») :
- l'insert 50' est enfoncé à l'intérieur du connecteur 40' de telle sorte que l'extrémité 51' de la partie arrière 54' de l'insert 50' (qui est montée de manière étanche via un joint annulaire 2' contre une portée cylindrique interne 49a' du connecteur 40' tout comme dans le dispositif 1) dépasse de l'arrière du connecteur 40' dans la position finale en faisant ainsi saillie axialement vers l'arrière de l'orifice arrière O1' du connecteur 40' pour le premier fluide (la partie avant 55' de l'insert 50' ne dépassant pas de l'orifice avant O3' du connecteur 40' comme précédemment),
- le second canal 42' dans lequel s'écoule le second fluide a sa portion radiale 44' qui s'étend directement à partir d'un orifice externe O2' d'axe Y perpendiculaire à l'axe X pour le connecteur 40' et communique avec la portion axiale 45', l'orifice O2' étant formé en une face axiale 47a' de ce dernier (sans portion arrière précédant axialement cette portion radiale 44' contrairement au dispositif 1), et
- les tronçons avant 40A' et arrière 408' du connecteur 40' sont de géométries autres que ceux du dispositif 1, étant assemblés l'un à l'autre avec interposition d'un joint d'étanchéité 3' par exemple via des boulons axiaux 47b', le tronçon avant 40A' comportant uniquement une courte paroi tubulaire avant 48' sans épaulement et une paroi radiale 47' qui la prolonge à angle droit et contre laquelle est monté en butée le second tuyau 30 lors de son raccordement au connecteur 40', tout le reste du connecteur 40' étant formé d'un tronçon arrière 40B' massif dans lequel sont formés les premier et second canaux 41' et 42'.

Le procédé d'assemblage de dispositifs 1' selon l'invention au sein d'un circuit de transfert de fluides qui est illustré aux figures 5-8 est applicable à l'identique dans son principe au dispositif 1 précité.

Comme visible aux figures 5 et 6, on commence dans un premier temps par faire coulisser suivant un mouvement axial relatif chacun des dispositifs 1' vers l'ensemble des premier et second tuyaux 20 et 30 coaxiaux (voir la flèche F1 pour le coulissement vers la droite du dispositif 1' de gauche), chaque dispositif 1' ayant avant et après ce coulissement son insert 50' occupant ladite position intermédiaire de livraison au sein du connecteur 40' dans laquelle l'extrémité avant 52' de l'insert 50' dépasse du connecteur 40'. On obtient ainsi par ce premier coulissement le raccordement des deux extrémités du premier tuyau interne 20 aux deux inserts 50' adjacents, que l'on fixe ensuite de manière étanche sur ces inserts 50',

Puis, comme illustré aux figures 7 et 8, on fait successivement coulisser vers la gauche le dispositif 1' de droite (voir flèche F2), pour amener l'insert 50' de l'autre dispositif 1' de gauche au fond du connecteur 40' le recevant (i.e. en faisant coulisser chaque insert 50' axialement vers l'arrière du connecteur 40' dans lequel il est logé), et inversement. On obtient ainsi par ce second coulissement le raccordement des deux extrémités du second tuyau externe 30 aux deux parois tabulaires 46' des connecteurs 40' adjacents, extrémités que l'on fixe ensuite de manière étanche sur ces parois 46'.

Concernant le raccordement des premier et second tuyaux 20 et 30 respectivement à l'insert 50, 50' et au connecteur 40, 40' des dispositifs 1, 1', on notera qu'il peut être réalisé par tous moyens connus, que ce soit :
- par sertissage dans le cas préférentiel de tuyaux 20 et 30 élastomères (i.e. en caoutchouc ou en élastomère thermoplastique), comme illustré aux figures 5-9 par les zones de fixation 22 et 32 respectivement des tuyaux 20 et 30 sur l'insert 50' et sur le connecteur 40', ou bien
- par un montage à force de type emmanchement ou par une soudure, dans le cas de tuyaux 20 et 30 en matière plastique (de préférence thermoplastique).

Les essais réalisés par la Demanderesse ont établi que la portion axiale 45, 45' de section annulaire du second canal 42, 42' était caractérisée par l'écoulement d'une couronne de second fluide sur une section transversale sensiblement constante et d'aire moyenne proche de 80 mm².

On notera enfin que les dispositifs 1, 1' selon l'invention peuvent être avantageusement dépourvus de tout matériau métallique.

## Revendications

1. Dispositif de raccordement et de chauffage (1, 1') comprenant :
- un connecteur (40, 40') externe à l'intérieur duquel sont formés :
* un premier canal (41, 41') s'étendant le long d'un premier axe de symétrie (X) à partir d'un premier orifice (O1, O1') du connecteur et destiné à véhiculer un premier fluide à réchauffer, et
* un second canal (42, 42') entourant ledit premier canal et destiné à véhiculer un second fluide caloporteur, ledit second canal comprenant une portion radiale d'écoulement (44, 44') pour le second fluide s'étendant suivant un second axe (Y) perpendiculaire audit premier axe et une portion axiale d'écoulement (45, 45') pour le second fluide prolongeant ladite portion radiale le long dudit premier axe jusqu'à un second orifice (O3, O3') du connecteur coaxial audit premier orifice ; et
- un insert tubulaire de connexion (50, 50') qui est monté suivant ledit premier axe à l'intérieur du connecteur et qui est adapté pour connecter ledit premier orifice à un premier tuyau (20) prolongeant coaxialement ledit premier canal hors dudit second orifice, respectivement par une première extrémité (51, 51') de l'insert adjacente audit premier orifice et par une seconde extrémité (52, 52') de l'insert adjacente audit second orifice, l'insert définissant à l'intérieur du connecteur :
* un conduit interne (53) de l'insert définissant partiellement ledit premier canal, et
* ladite portion axiale, de section transversale annulaire formée radialement entre l'insert et une paroi tubulaire (46, 46') du connecteur, laquelle s'étend suivant ledit premier axe jusqu'audit second orifice ;
le premier fluide parcourant l'insert étant réchauffé par le second fluide,
l'insert étant configuré pour être monté par coulissement (F) à travers ledit second orifice en passant d'une position intermédiaire de non-raccordement du dispositif où ladite seconde extrémité de l'insert est située axialement à l'extérieur dudit second orifice, à une position finale de raccordement du dispositif où ladite seconde extrémité de l'insert est située axialement vers l'intérieur dudit second orifice, **caractérisé en ce que** ladite première extrémité (51, 51') de l'insert (50, 50') est montée contre ladite paroi tubulaire (46, 46') du connecteur (40, 40') dans ladite position intermédiaire, et de manière étanche contre ledit premier orifice (O1, O1') dans ladite position finale.

2. Dispositif de raccordement et de chauffage (1, 1') selon la revendication 1, **caractérisé en ce que** ledit coulissement présente une course axiale (L) entre ladite position intermédiaire et ladite position finale qui est au moins égale à une longueur axiale (I) de ladite portion radiale (44, 44') dudit second canal (42, 42') mesurée selon ledit premier axe (X).

3. Dispositif de raccordement et de chauffage (1, 1') selon une des revendications précédentes, **caractérisé en ce que** l'insert (50, 50') présente une structure monobloc comprenant :
- une première partie (54, 54') de diamètre externe maximal qui comprend ladite première extrémité (51, 51') de l'insert et qui est montée contre ledit premier orifice (O1, O1') dans ladite position finale, et
- une seconde partie (55, 55') de diamètre externe minimal qui comprend ladite seconde extrémité (52, 52') de l'insert et autour de laquelle est destiné à être monté ledit premier tuyau (20).

4. Dispositif de raccordement et de chauffage (1, 1') selon la revendication 3, **caractérisé en ce que** dans ladite position finale, ladite portion radiale (44, 44') et ladite portion axiale (45, 45') dudit second canal (42, 42') enveloppent l'insert (50, 50') sur une longueur axiale d'enveloppement qui est supérieure à 75 % d'une longueur axiale de l'insert, et **en ce que** ladite paroi tubulaire (46, 46') du connecteur (40, 40') présente un diamètre interne moyen au moins égal à 1,5 fois ledit diamètre externe minimal de l'insert, de sorte à chauffer pratiquement tout le premier fluide parcourant l'insert par le second fluide.

5. Dispositif de raccordement et de chauffage (1, 1') selon la revendication 3 ou 4, **caractérisé en ce que** le connecteur (40, 40') comprend:
- ladite paroi tubulaire (46, 46'), autour de laquelle est destiné à être monté un second tuyau (30) véhiculant ledit second fluide,
- une paroi transversale avant (47, 47') qui est globalement perpendiculaire à ladite paroi tubulaire et vers l'intérieur de laquelle est formée ladite portion radiale (44, 44'), et
- une paroi transversale arrière (40B, 40B') qui est perpendiculaire à ladite paroi tubulaire et dans laquelle est formé ledit premier orifice (O1, O1'), lequel se prolonge suivant ledit premier axe (X) par une première partie dudit premier canal (41, 41') qui est définie dans ladite position finale par ladite première partie (54, 54') de l'insert (50, 50') en y définissant partiellement ledit conduit interne (53) de l'insert, un premier embout d'acheminement (11) du premier fluide dans le connecteur étant destiné à être enfoncé dans ledit conduit interne ou à enserrer ledit conduit interne, de sorte que l'intérieur de l'insert soit réchauffé par ledit second fluide.

6. Dispositif de raccordement et de chauffage (1, 1') selon la revendication 5, **caractérisé en ce que** le connecteur (40, 40') comprend une coque externe comportant un tronçon avant (40A, 40A') dans laquelle sont formées ladite paroi tubulaire (46, 46') et ladite paroi transversale avant (47, 47'), et un tronçon arrière (40B, 40B') dans laquelle est formée ladite paroi transversale arrière (40B, 40B'), laquelle comprend en outre un troisième orifice (O2, O2') pour acheminer axialement le second fluide parallèlement audit premier fluide et vers ladite portion radiale (44, 44') dudit second canal (42, 42').

7. Dispositif de raccordement et de chauffage (1) selon la revendication 6, **caractérisé en ce que** ledit troisième orifice (O2) se prolonge parallèlement audit premier axe (X) et à distance radiale de ce dernier par une portion arrière (43) dudit second canal (42), laquelle est destinée à être occupée par un second embout (13) d'acheminement du second fluide enfoncé dans le connecteur (40) et débouche dans ladite portion radiale (44) dudit second canal.

8. Dispositif de raccordement et de chauffage (1) selon la revendication 7, **caractérisé en ce que** ladite coque externe (40) est assemblée par solidarisation mécanique dudit tronçon avant (40A) avec ledit tronçon arrière (40B) avec interposition d'au moins un joint d'étanchéité annulaire (3), ledit tronçon arrière présentant un épaulement circonférentiel (48d) formant butée pour ledit second embout (13) une fois ce dernier enfoncé dans ladite portion arrière (43) dudit second canal (42) ou enserrant ladite portion arrière.

9. Dispositif de raccordement et de chauffage (1) selon la revendication 8, **caractérisé en ce que** ladite solidarisation mécanique entre ledit tronçon avant (40A) et ledit tronçon arrière (40B) est de type clipsage, au moyen d'une patte périphérique (48b) dudit tronçon arrière venant crocheter une nervure périphérique (47b) dudit tronçon avant, ladite paroi transversale arrière (40B) présentant une face externe plane adaptée pour recevoir une plaque transversale (12) traversée de part en part par ledit premier embout (11) et par ledit second embout (13).

10. Dispositif de raccordement et de chauffage (1) selon une des revendications précédentes, **caractérisé en ce que** le dispositif comprend des moyens de calage axial (46a et 58, 48f et 59) de l'insert (50) à l'intérieur du connecteur (40) dans ladite position intermédiaire de non-raccordement et dans ladite position finale de raccordement, qui comprennent de préférence des saillies radiales (46a, 48f) du connecteur coopérant avec des renfoncements radiaux (58, 59) de l'insert.

11. Circuit de transfert d'un premier fluide, en particulier un circuit de dépollution d'un véhicule automobile à moteur thermique par réduction catalytique sélective transférant une solution aqueuse d'urée à titre de premier fluide, le circuit de transfert comprenant :
- un réservoir (10) du premier fluide, et
- un dispositif de raccordement et de chauffage (1, 1') qui est adapté pour raccorder ledit réservoir à un premier tuyau (20) véhiculant le premier fluide et qui est adapté pour réchauffer le premier fluide par un second fluide, en particulier un liquide de refroidissement du moteur réchauffé par ce dernier, le dispositif étant apte à véhiculer le second fluide entre ledit réservoir qu'il traverse de manière étanche et un second tuyau (30) véhiculant le second fluide,
**caractérisé en ce que** le dispositif de raccordement et de chauffage est tel que défini à l'une des revendications précédentes.

12. Circuit selon la revendication 11, **caractérisé en ce qu'**il comprend en outre ledit premier tuyau (20) et ledit second tuyau (30) qui sont chacun indépendamment élastomères ou plastiques et qui sont rigides axialement et souples radialement.

13. Circuit selon la revendication 11 ou 12, **caractérisé en ce que** dans ladite position finale de raccordement du dispositif de raccordement et de chauffage (1, 1') :
- ledit premier tuyau (20) est fixé sur et autour de l'insert (50, 50') en une première zone de fixation (21, 22) située axialement à l'intérieur du connecteur (40, 40') en regard de ladite paroi tubulaire, et
- ledit second tuyau (30) est fixé sur et autour d'une portée cylindrique (46c) de ladite paroi tubulaire (46, 46') en une seconde zone de fixation (31, 32) située en regard de ou axialement juxtaposée à ladite première zone de fixation.

14. Procédé d'assemblage d'un dispositif de raccordement et de chauffage (1, 1') selon une des revendications 1 à 10, **caractérisé en ce que** l'on fait coulisser l'insert (50, 50') à travers ledit second orifice (O3, O3') et selon ledit premier axe (X) en le faisant passer de ladite position intermédiaire à ladite position finale.

15. Procédé d'assemblage d'un circuit de transfert selon une des revendications 11 à 13, **caractérisé en ce qu'**il comprend les étapes suivantes :
a) coulissement relatif dudit premier tuyau (20) entouré par ledit second tuyau (30) vers ladite paroi tubulaire (46, 46') du connecteur (40, 40') pour raccorder de manière étanche ledit premier tuyau à l'insert (50, 50'), lequel occupe alors ladite position intermédiaire où il dépasse axialement du connecteur, et
b) coulissement relatif de l'insert ainsi raccordé axialement vers l'intérieur de ladite paroi tubulaire, pour faire passer l'insert de ladite position intermédiaire à ladite position finale dans laquelle il est entièrement situé à l'intérieur du connecteur, et pour raccorder de manière étanche ledit second tuyau à ladite paroi tubulaire.

## Patentansprüche

1. Verbindungs- und Erwärmungsvorrichtung (1, 1'), umfassend:
- ein externes Verbindungsstück (40, 40'), in dessen Innerem Folgende gebildet sind:
* ein erster Kanal (41, 41'), der sich entlang einer ersten Symmetrieachse (X), ausgehend von einer ersten Öffnung (O1, O1') des Verbindungsstücks, erstreckt und dazu bestimmt ist, ein erstes, zu erwärmendes Fluid zu befördern, und
* ein zweiter Kanal (42, 42'), der den ersten Kanal umgibt und dazu bestimmt ist, ein zweites Wärmeträgerfluid zu befördern, wobei der zweite Kanal einen radialen Strömungsabschnitt (44, 44') für das zweite Fluid, der sich einer zweiten Achse (Y) folgend senkrecht zur ersten Achse erstreckt, und einen axialen Strömungsabschnitt (45, 45') für das zweite Fluid umfasst, der den radialen Abschnitt entlang der ersten Achse bis zu einer zweiten Öffnung (O3, O3') des Verbindungsstücks koaxial zur ersten Öffnung verlängert; und
- einen rohrförmigen Anschlusseinsatz (50, 50'), der der ersten Achse folgend im Inneren des Verbindungsstücks montiert und dazu geeignet ist, die erste Öffnung mit einem ersten Rohr (20) zu verbinden, welches den ersten Kanal außerhalb der zweiten Öffnung jeweils durch ein erstes Ende (51, 51') des an die erste Öffnung angrenzenden Einsatzes und durch ein zweites Ende (52, 52') des an die zweite Öffnung angrenzenden Einsatzes koaxial verlängert, wobei der Einsatz im Inneren des Verbindungsstücks Folgendes definiert:
* eine interne Leitung (53) des Einsatzes, die den ersten Kanal teilweise definiert, und
* den axialen Abschnitt mit ringförmigem Querschnitt, der radial zwischen dem Einsatz und einer rohrförmigen Wand (46, 46') des Verbindungsstücks gebildet ist, der sich der ersten Achse folgend bis zur zweiten Öffnung erstreckt;
wobei das erste Fluid, das durch den Einsatz strömt, durch das zweite Fluid erwärmt wird,
wobei der Einsatz konfiguriert ist, durch Verschieben (F) durch die zweite Öffnung unter Passieren einer verbindungslosen Zwischenposition der Vorrichtung, wobei sich das zweite Ende des Einsatzes axial außerhalb der zweiten Öffnung befindet, in eine Endverbindungsposition der Vorrichtung montiert zu werden, wobei sich das zweite Ende des Einsatzes axial in Richtung des Inneren der zweiten Öffnung befindet, **dadurch gekennzeichnet, dass**
das erste Ende (51, 51') des Einsatzes (50, 50') in der Zwischenposition an der rohrförmigen Wand (46, 46') des Verbindungsstücks (40, 40') und in der Endposition auf dichte Weise an die erste Öffnung (O1, O1') montiert ist.

2. Verbindungs- und Erwärmungsvorrichtung (1, 1') nach Anspruch 1, **dadurch gekennzeichnet, dass** die Verschiebung eine axiale Bahn (L) zwischen der Zwischenposition und der Endposition aufweist, die mindestens gleich einer axialen Länge (I) des radialen Abschnitts (44, 44') des zweiten Kanals (42, 42') ist, gemessen entlang der ersten Achse (X).

3. Verbindungs- und Erwärmungsvorrichtung (1, 1') nach einem der vorstehenden Ansprüche, **dadurch gekennzeichnet, dass** der Einsatz (50, 50') eine einstückige Struktur aufweist, umfassend:
- einen ersten Teil (54, 54') mit maximalem Außendurchmesser, der das erste Ende (51, 51') des Einsatzes umfasst und in der Endposition an der ersten Öffnung (O1, O1') montiert ist,
- einen zweiten Teil (55, 55') mit minimalem Außendurchmesser, der das zweite Ende (52, 52') des Einsatzes umfasst und um welchen herum das erste Rohr (20) bestimmt ist, montiert zu werden.

4. Verbindungs- und Erwärmungsvorrichtung (1, 1') nach Anspruch 3, **dadurch gekennzeichnet, dass** in der Endposition der radiale Abschnitt (44, 44') und der axiale Abschnitt (45, 45') des zweiten Kanals (42, 42') den Einsatz (50, 50') auf einer axialen Ummantelungslänge ummantelt, die mehr als 75 % einer axialen Länge des Einsatzes beträgt,
und dass die rohrförmige Wand (46, 46') des Verbindungsstücks (40, 40') einen mittleren Innendurchmesser von mindestens gleich 1,5-mal dem minimalen Außendurchmesser des Einsatzes aufweist, sodass praktisch das gesamte erste Fluid, das durch den Einsatz strömt, durch das zweite Fluid erwärmt wird.

5. Verbindungs- und Erwärmungsvorrichtung (1, 1') nach Anspruch 3 oder 4, **dadurch gekennzeichnet, dass** das Verbindungsstück (40, 40') umfasst:
- die rohrförmige Wand (46, 46'), um welche herum ein zweites Rohr (30), das zweite Fluid befördernd, bestimmt ist, montiert zu werden,
- eine vordere Querwand (47, 47'), die im Wesentlichen senkrecht zur rohrförmigen Wand liegt und in Richtung des Innerem deren der radiale Abschnitt (44, 44') gebildet ist, und
- eine hintere Querwand (40B, 40B'), die senkrecht zur rohrförmigen Wand liegt und in der die erste Öffnung (O1, O1') gebildet ist, die sich der ersten Achse (X) folgend um einen ersten Teil des ersten Kanals (41, 41') verlängert, der in der Endposition durch den ersten Teil (54, 54') des Einsatzes (50, 50') definiert ist, indem in diesem die interne Leitung (53) des Einsatzes teilweise definiert ist, wobei eine erste Durchleitungstülle (11) des ersten Fluids in dem Verbindungsstück dazu bestimmt ist, in die interne Leitung eingeschoben zu werden oder die interne Leitung zu umschließen, sodass das Innere des Einsatzes von dem zweiten Fluid erwärmt wird.

6. Verbindungs- und Erwärmungsvorrichtung (1, 1') nach Anspruch 5, **dadurch gekennzeichnet, dass** das Verbindungsstück (40, 40') eine Außenschale umfasst, die ein vorderes Teilstück (40A, 40A'), wobei die rohrförmige Wand (46, 46') und die vordere Querwand (47, 47') gebildet sind, und ein hinteres Teilstück (40B, 40B') beinhaltet, wobei die hintere Querwand (40B, 40B') gebildet ist, die des Weiteren eine dritte Öffnung (O2, O2') umfasst, um das zweite Fluid parallel zum ersten Fluid und in Richtung des radialen Abschnitts (44, 44') des zweiten Kanals (42, 42') axial durchzuleiten.

7. Verbindungs- und Erwärmungsvorrichtung (1) nach Anspruch 6, **dadurch gekennzeichnet, dass** sich die dritte Öffnung (O2) parallel zur ersten Achse (X) und mit einem radialen Abstand von dieser Letzteren durch einen hinteren Abschnitt (43) des zweiten Kanals (42) verlängert, der dazu bestimmt ist, von einer zweiten Durchleitungstülle (13) des zweiten Fluids belegt zu werden, die in das Verbindungsstück (40) eingeschoben wird und in den radialen Abschnitt (44) des zweiten Kanals mündet.

8. Verbindungs- und Erwärmungsvorrichtung (1) nach Anspruch 7, **dadurch gekennzeichnet, dass** die Außenschale (40) durch mechanische Verbindung des vorderen Teilstücks (40A) mit dem hinteren Teilstück (40B) unter Zwischenschaltung mindestens eines ringförmigen Dichtungselements (3) zusammengebaut wird, wobei das hintere Teilstück einen Umfangsabsatz (48d) aufweist, der einen Anschlag für die zweite Tülle (13) bildet, sobald diese Letztere in den hinteren Abschnitt (43) des zweiten Kanals (42) eingeschoben wurde oder den hinteren Abschnitt umschließt.

9. Verbindungs- und Erwärmungsvorrichtung (1) nach Anspruch 8, **dadurch gekennzeichnet, dass** die mechanische Verbindung zwischen dem vorderen Teilstück (40A) und dem hinteren Teilstück (40B) vom Schnappverbindungstyp ist, mittels eines Umfangsansatzes (48b) des hinteren Teilstücks mit einer Umfangsrippe (47b) des vorderen Teilstücks in Eingriff kommt, wobei die hintere Querwand (40B) eine äußere ebene Fläche aufweist, die dazu geeignet ist, eine Querplatte (12) aufzunehmen, die von einer Seite zur anderen von der ersten Tülle (11) und von der zweiten Tülle (13) gequert wird.

10. Verbindungs- und Erwärmungsvorrichtung (1) nach einem der vorstehenden Ansprüche, **dadurch gekennzeichnet, dass** die Vorrichtung axiale Positionierungsmittel (46a und 58, 48f und 59) des Einsatzes (50) im Inneren des Verbindungsstücks (40) in der verbindungslosen Zwischenposition und in der Endverbindungsposition umfasst, welche vorzugsweise radiale Vorsprünge (46a, 48f) des Verbindungsstücks umfassen, die mit radialen Aussparungen (58, 59) des Einsatzes zusammenwirken.

11. Übertragungskreislauf eines ersten Fluids, insbesondere ein Abgasreinigungskreislauf eines Kraftfahrzeugs mit Wärmemotor durch selektive katalytische Reduktion, der eine wässrige Harnstofflösung als erstes Fluid überträgt, wobei der Übertragungskreislauf umfasst:
- einen Behälter (10) für das erste Fluid und
- eine Verbindungs- und Erwärmungsvorrichtung (1, 1'), die dazu geeignet ist, den Behälter mit einem ersten Rohr (20) zu verbinden, welches das erste Fluid befördert und dazu geeignet ist, das erste Fluid durch ein zweites Fluid, insbesondere eine Kühlflüssigkeit des Motors, die durch letzteren erwärmt wird, zu erwärmen, wobei die Vorrichtung dazu geeignet ist, das zweite Fluid zwischen dem Behälter, welchen es auf dichte Weise durchströmt, und einem zweiten Rohr (30) zu befördern, welches das zweite Fluid befördert,
**dadurch gekennzeichnet, dass** die Verbindungs- und Erwärmungsvorrichtung wie in einem der vorstehenden Ansprüche definiert ist.

12. Kreislauf nach Anspruch 11, **dadurch gekennzeichnet, dass** er weiter das erste Rohr (20) und das zweite Rohr (30) umfasst, die jeweils unabhängig Elastomere oder Kunststoffe sind und die in Axialrichtung starr und in Radialrichtung flexibel sind.

13. Kreislauf nach Anspruch 11 oder 12, **dadurch gekennzeichnet, dass** in der Endverbindungsposition der Verbindungs- und Erwärmungsvorrichtung (1, 1'):
- das erste Rohr (20) in einem ersten Befestigungsbereich (21, 22) auf dem und um den Einsatz (50, 50') herum befestigt ist, der sich im Inneren des Verbindungsstücks (40, 40') der rohrförmigen Wand axial 'zugewandt befindet, und
- das zweite Rohr (30) in einem zweiten Befestigungsbereich (31, 32) auf einem und um eine zylindrische Auflagefläche (46c) der rohrförmigen Wand (46, 46') herum befestigt ist, die sich dem ersten Befestigungsbereich zugewandt oder axial benachbart befindet.

14. Zusammenbauverfahren einer Verbindungs- und Erwärmungsvorrichtung (1, 1') nach einem der Ansprüche 1 bis 10, **dadurch gekennzeichnet, dass** der Einsatz (50, 50') durch die zweite Öffnung (O3, O3') und entlang der ersten Achse (X) verschoben wird, indem er von der Zwischenposition zur Endposition geleitet wird.

15. Zusammenbauverfahren eines Übertragungskreislaufs nach einem der Ansprüche 11 bis 13, **dadurch gekennzeichnet, dass** es die folgenden Schritte umfasst:
a) relatives Verschieben des ersten Rohrs (20), das von dem zweiten Rohr (30) umgeben ist, in Richtung der rohrförmigen Wand (46, 46') des Verbindungsstücks (40, 40'), um das erste Rohr auf dichte Weise mit dem Einsatz (50, 50') zu verbinden, der anschließend die Zwischenposition einnimmt, in der er das Verbindungsstück axial überragt, und
b) relatives Verschieben des Einsatzes, der so axial in Richtung des Inneren der rohrförmigen Wand verbunden wird, um den Einsatz von der Zwischenposition in die Endposition zu leiten, in der er sich vollständig im Inneren des Verbindungsstücks befindet, und um das zweite Rohr auf dichte Weise mit der rohrförmigen Wand zu verbinden.

## Claims

1. Fluid connection/heating device (1, 1') comprising:
- an external connector (40, 40') inside which are formed:
* a first channel (41, 41') extending along a first symmetry axis (X) from a first orifice (O1, O1') of the connector and intended to convey a first fluid to be heated, and
* a second channel (42, 42') surrounding said first channel and intended to convey a second heat transfer fluid, said second channel comprising a radial flow section (44, 44') for the second fluid, that extends along a second axis (Y) perpendicular to said first axis and an axial flow section (45, 45') for said second fluid that extends said radial section along said first axis to a second orifice (O3, O3') of the connector coaxial with said first orifice; and
- a tubular connection insert (50, 50') that is mounted along said first axis inside the connector, and is adapted to connect said first orifice to a first pipe (20) that coaxially extends said first channel out of said second orifice, by a first end (51, 51') of the insert adjacent to said first orifice and a second end (52, 52') of the insert adjacent to said second orifice, respectively, the insert defining, inside the connector:
* an inner conduit (53) of the insert that partially defines said first channel, and
* said axial section, having an annular cross section that forms radially between the insert and a tubular wall (46, 46') of the connector, which extends along said first axis to said second orifice;
the first fluid flowing through the insert being heated by the second fluid,
the insert being configured to be mounted by sliding (F) through said second orifice from an intermediate non-connection position of the device in which said second end of the insert is axially located inside said second orifice, to a final connection position of the device in which said second end of the insert is axially located towards the inside of said second orifice,
**characterised in that**
said first end (51, 51') of the insert (50, 50') is mounted against said tubular wall (46, 46') of the connector (40, 40') in said intermediate position, and in a sealed manner against said first orifice (O1, O1') in said final position.

2. Fluid connection/heating device (1, 1') according to claim 1, **characterised in that** said sliding has an axial stroke (L) between said intermediate position and said final position which is at least equal to one axial length (I) of said radial section (44, 44') of said second channel (42, 42') measured along said first axis (X).

3. Fluid connection/heating device (1, 1') according to any of the preceding claims, **characterised in that** the insert (50, 50') has a one-piece structure comprising:
- a first section (54, 54') of maximum external diameter, that comprises said first end (51, 51') of the insert and that is mounted against said first orifice (O1, O1') in said final position, and
- a second section (55, 55') of minimal external diameter, that comprises said second end (52, 52') of the insert and around which said first pipe (20) is destined to be mounted.

4. Fluid connection/heating device (1, 1') according to claim 3, **characterised in that** in said final position, said radial section (44, 44') and said axial section (45, 45') of said second channel (42, 42') wrap the insert (50, 50') along an axial wrapping length that is greater than 75% of an axial length of the insert, and **in that** said tubular wall (46, 46') of the connector (40, 40') has a mean internal diameter of at least 1.5 times said minimal external diameter of the insert, so as to heat practically all the first fluid that flowing through the insert using the second fluid.

5. Fluid connection/heating device (1, 1') according to claim 3 or 4, **characterised in that** the connector (40, 40') comprises:
- said tubular wall (46, 46') around which a second pipe (30) conveying said second fluid is destined to be mounted,
- a front transverse wall (47, 47') that is essentially perpendicular to said tubular wall and towards the inside of which said radial section (44, 44') is formed, and
- a rear transverse wall (40B, 40B') that is perpendicular to said tubular wall and in which said first orifice (O1, O1') is formed, said orifice extending along said first axis (X) into a first section of said first channel (41, 41') that is defined in said final position by said first section (54, 54') of the insert (50, 50'), where it partially defines said inner conduit (53) of the insert, a first conveying tip (11) for the first fluid into the connector being intended to be inserted into said inner conduit or to grip said inner conduit so that the inside of the insert is heated by said second fluid.

6. Fluid connection/heating device (1, 1') according to claim 5, **characterised in that** the connector (40, 40') comprises an outer shell that has a front section (40A, 40A') in which said tubular wall (46, 46') and said front transverse wall (47, 47') are formed, and a rear section (40B, 40B') in which is formed said rear transverse wall (40B, 40B'), which further comprises a third orifice (O2, O2') to axially convey the second fluid in parallel with said first fluid and towards said radial section (44, 44') of said second channel (42, 42').

7. Fluid connection/heating device (1) according to claim 6, **characterised in that** said third orifice (O2) extends parallel to said first axis (X) and at a radial distance from the latter by a rear section (43) of said second channel (42), which is intended to be occupied by a second conveying tip (13) for the second fluid, inserted into the connector (40) and opens into said radial section (44) of said second channel.

8. Fluid connection/heating device (1) according to claim 7, **characterised in that** said outer shell (40) is assembled by mechanical attachment of said front section (40A) with said rear section (40B) with at least one annular sealing ring (3) between them, said rear section having a circumferential shoulder (48d) that forms an abutment for said second tip (13) once the latter is inserted into said rear section (43) of said second channel (42) or enclosing said rear section.

9. Fluid connection/heating device (1) according to claim 8, **characterised in that** said mechanical attachment between said front section (40A) and said rear section (40B) is of a clip-on type, using a peripheral lug (48b) of said rear section that hooks into a peripheral rib (47b) of said front section, said rear transverse wall (40B) having a planar outer face made to receive a transverse plate (12) through which said first tip (11) and second tip (13) go completely.

10. Fluid connection/heating device (1) according to any of the preceding claims, **characterised in that** said device comprises axial locking means (46a and 58, 48f and 59) of the insert (50) inside the connector (40) in said intermediate non-connection position and in said final connection position, which preferably have radial projections (46a, 48f) of the connector that work in conjunction with radial recesses (58, 59) of the insert.

11. Transfer circuit for a first fluid, in particular a decontamination circuit of a motor vehicle equipped with a thermal engine by selective catalytic reduction transferring an aqueous solution of urea as a first fluid, the transfer circuit comprising:
- a tank (10) of first fluid, and
- a connection/heating device (1, 1') that is adapted to connect said tank to a first pipe (20) that conveys the first fluid and is adapted to heat the first fluid using a second fluid, in particular a cooling fluid for the engine heated by the latter, the device being able to convey the second fluid between said tank, that it crosses in a sealed way, and a second pipe (30) that conveys the second fluid,
**characterised in that** the connection/heating device is as described in one of the preceding claims.

12. Circuit according to claim 11, **characterised in that** it further comprises said first pipe (20) and said second pipe (30), each being independently elastomeric or plastic, and axially rigid and radially flexible.

13. Circuit according to claim 11 or claim 12, **characterised in that** in the final connection position of the connection/heating device (1, 1'):
- said first pipe (20) is fixed on and around the insert (50, 50') in a first fixation zone (21, 22) axially located inside the connector (40, 40') facing said tubular wall, and
- said second pipe (30) is fixed on and around a cylindrical surface (46c) of said tubular wall (46, 46') in a second fixation zone (31, 32), located facing or axially next to said first fixation zone.

14. Method for assembling a connection and heating device (1, 1') according to one of claims 1 to 10, **characterised in that** the insert (50, 50') is made to slide through said second orifice (O3, O3') and along said first axis (X), making it go from said intermediate position to said final position.

15. Method for assembling a transfer circuit according to one of claims 11 to 13, **characterised in that** it comprises the following steps:
a) relative sliding of said first pipe (20) surrounded by said second pipe (30) towards said tubular wall (46, 46') of the connector (40, 40') to connect in a sealed fashion said first pipe to the insert (50, 50'), which then occupies said intermediate position, where it protrudes axially from the connector, and
b) relative sliding of the insert thus axially connected towards the inside of said tubular wall, to move the insert from said intermediate position to said final position, in which it is wholly located inside the connector, and to connect and seal said second pipe to said tubular wall.
